# EUROPEAN PATENT SPECIFICATION

(11) **EP 0 885 566 B1**
(45) Date of publication and mention of the grant of the patent: **18.09.2002**
(21) Application number: 98201384.9
(22) Date of filing: 28.04.1998
(51) Int. Cl.: A23C 11/04, A23F 5/40

(54) **Soluble beverage creamer**
Löslicher Getränkeaufheller
Crème soluble pour boissons

(30) Priority: 19.06.1997 EP 97201860
(43) Date of publication of application: 23.12.1998
(73) Proprietor: SOCIETE DES PRODUITS NESTLE S.A., 1800 Vevey (CH)
(72) Inventor: Munz-Schaerer, Daniela Doris, 3510 Konolfingen (CH); Wyss, Heinz, 3515 Oberdiessbach (CH); Chmiel, Oliver, 1350 Orbe (CH)

(56) References cited:
- EP-A- 0 154 192
- EP-A- 0 579 328
- GB-A- 2 301 015
- US-A- 4 378 380
- US-A- 4 438 147
- US-A- 5 284 674

## Description

This invention relates to a soluble beverage creamer which, upon addition of a liquid, forms a frothy, white foam on the surface of the liquid. The soluble beverage creamer is especially suitable for use in soluble coffee beverage products which are of the instant "cappuccino" type. The invention also relates to soluble coffee beverage products which contain the soluble beverage creamer.

Soluble coffee beverage products of the instant "cappuccino" type are well known and are commercially available. Usually these products are a dry mix of a soluble coffee powder and a soluble beverage creamer. The soluble beverage creamer contains pockets of gas which, upon dissolution of the powder, produce foam. Therefore, upon the addition of water (usually hot), a whitened coffee beverage, which has a foam on its upper surface, is formed; the beverage resembling, to a greater or lesser extent, traditional Italian cappuccino.

Of the two main components of the soluble coffee beverage product, the soluble beverage creamer has shown to be the most problematic. In order to produce an acceptable beverage, little or no lumps should form upon dissolution. Unfortunately, dairy proteins are susceptible to flocculation in the presence of raised temperatures and acidic conditions; both of which are present upon dissolution of the soluble beverage powder. However, flocculation is one of the causes of the formation of lumps. Creamer compositions are disclosed in, e.g., 6-B 2 301 015 and EP 0 154 192.

Further, to closely resemble a traditional Italian cappuccino, a light, fluffy stable foam should form on the surface of the beverage. However, quite often the foam produced by soluble "cappuccino" powders is not light and fluffy. Also, many of the beverage creamers impart a milky taste which many consumers find undesirable.

Therefore there is still a need for a beverage creamer which is able to provide a good, stable foam upon a beverage formed by the addition of hot water.

Accordingly, in one aspect, this invention provides a soluble beverage creamer which comprises 15% to 30% by weight of non-fat milk solids; sweet whey; a lipid component; and an aroma substrate carrying coffee aroma, the soluble beverage creamer being in powder form and containing gas for foaming.

Upon dissolution in hot water, the beverage creamer forms a light, fluffy and stable foam. Due to the relatively low amount of non-fat milk solids, the beverage creamer is resistant to the formation of lumps despite being reconstituted in hot water. Further, the beverage produced has an enhanced coffee smell and reduced milkiness.

In another aspect, this invention provides a soluble coffee beverage powder which, upon the addition of water, is capable of forming a coffee beverage having a foamed upper surface, the soluble beverage powder comprising: a soluble coffee powder; and a soluble beverage creamer which comprises 15% to 30% by weight of non-fat milk solids, sweet whey, a lipid component and an aroma substrate carrying coffee aroma, the soluble beverage creamer being in powder form and containing gas for foaming.

The soluble coffee beverage powder preferably comprises 10 to 30% by weight of the soluble coffee powder and 90% to 70% by weight of the soluble beverage creamer. However, the soluble beverage powder may further include 5% to 20% by weight of sucrose.

Embodiments of the invention are now described by way of example only. The invention is based upon the discovery that an excellent beverage creamer may be provided by reducing the content of non-fat milk solids and adding sweet whey and an aroma substrate which carries coffee aroma.

The beverage creamer contains 15% to 30% by weight of non-fat milk solids; for example 20 to 25% by weight. The non-fat milk solids may be obtained from fresh skimmed milk or skimmed milk powder.

The beverage creamer preferably contains 5% to 20% by weight of sweet whey; for example 10% to 15% by weight. The sweet whey is preferably provided in the form of sweet whey powder. Sweet whey powder usually contains a mixture of lactose and whey protein; for example about 80% by weight of lactose and about 12% by weight of whey protein.

The beverage creamer includes a lipid component. The lipid component may be any suitable edible oil or fat. Bland vegetable oils or fats such as coconut oil are particularly preferred. The lipid component preferably makes up 5% to 25% by weight of the beverage creamer; for example 10% to 20% by weight.

The aroma substrate is preferably a edible, bland vegetable oil or fat. Suitable examples are coffee oil and coconut fat. Coconut fat is particularly preferred. The aroma substrate preferably makes up 0.5% to 5% by weight of the beverage creamer; for example 1% to 2% by weight.

The aroma substrate carries a coffee aroma. The coffee aroma used may be any suitable coffee aroma; natural or synthetic. However natural aromas collected during the preparation of soluble coffee powder are preferred. Procedures for collecting the aromas are well known. Usually they entail flushing the volatile aromas from the coffee during processing using an inert carrier gas such as nitrogen. The aroma-laden carrier gas is then chilled to temperatures lower than -40°C, and sometimes as low as -195°C, to cause the aromas to condense. The condensed aromas are then collected. The condensed aromas are then usually absorbed into the aroma substrate. Alternatively, the aromas may be absorbed into the aroma substrate during condensation. Suitable procedures for carrying out the condensation and absorption steps are disclosed in, for example, US patents 3823241, 5030473, and 5222364.

The beverage creamer may also contain a sweetener. Any suitable food grade sweetener may be used; for example those conventionally used in the production of powdered creamers. Examples of suitable sweeteners are sugars such as glucose syrup, corn syrup, sucrose, dextrose, fructose, maltodextrin, and the like, and mixtures of these sugars. Glucose syrup is particularly suitable, especially syrups having a DE in the range of 35 to 42. Maltodextrin, either alone or in combination with other sugars, may also be used. In any event, the particular sweetener or combination of sweeteners selected is not critical; the primary determining factors being the desired taste, sweetness and bulk. The amount of sweetener used will vary depending upon the sweetener, the desired level of sweetness and the strength of the sweetener; but preferably comprises 30% to 70% by weight of the beverage creamer; for example 40% to 50% by weight.

The sweetener may also contain artificial sweeteners such as saccharin, cyclamates, acetosulfame, L-aspartyl based sweeteners such as aspartame, and mixtures of these. If an artificial sweetener is used, it is suitably combined with bulking agents such as maltodextrins and polydextrose. In this case, the total amount of sweetener and bulking agent is usually in the range of 30 to 70% by weight; artificial sweetener itself usually comprising less than 1% by weight.

If desired, the beverage creamer may also contain suitable emulsifiers; although this is not necessary. Suitable emulsifiers may be selected from monoglycerides, distilled monoglycerides, diglycerides, glycerol monostearates, sorbitol monostearates, esters or carbocyclic acids with mono- and di-glycerides, monosodium phosphate derivatives of mono- and di-glycerides, lecithin, diacetyl tartaric acid esters of mono-diglycerides (data esters), sorbitan esters, diacetyl tartaric acids esters of mono- and di-glycerides, succinylated mono- and diglycerides, acetylated mono- and di-glycerides, hydroxylated lecithin, propylene glycol mono- and di-esters of fatty acids, polyglycerol esters of fatty acids, lactylic esters of fatty acids, and mixtures thereof.

The beverage creamer may also contain suitable stabilisers; for example dipotassium phosphate and sodium citrate. However the use of stabilisers is in general not necessary due to the particular combination of essential components of the beverage creamer. If stabilisers are used, the amount of stabilisers used may be in the range of 0.1 % to 5% by weight of the beverage creamer.

Suitable flavouring agents, colouring agents, flowing agents, antioxidants, and the like may also be included as desired. A suitable flowing agent is sodium silica aluminate.

The beverage creamer may be produced by any suitable technique. For example, a standardised solution may be prepared by combining the skimmed milk, sweet whey, and lipid component in selected proportions to obtain a solution of desired fat and solids content. Water may be added as necessary. The sweetener may be dissolved in the standardised solution. The standardised solution is then heat treated; for example at about 105°C for about 5 seconds. Then the standardised solution is concentrated by evaporation; usually to a total solids concentration of 40 to 60 % by weight. If desired, the concentrated solution may be homogenised. If the aroma substrate was not added earlier, it may be mixed into the homogenised solution at this stage.

The homogenised solution is then gassed by injecting a gas such as air, nitrogen or carbon dioxide into it; for example at a pressure of about 100 to 400 kPa above the pressure of the concentrated solution. The gassed solution is then pumped to the spray nozzle of a spray drier, usually at a pressure of about 2.5 MPa to about 8 MPa, and sprayed. Hot air at a temperature of 200°C to 400°C is then used to dry the droplets. If desired, a device (such as a screen) may be placed over the hot air inlet to break up the incoming hot air stream into many secondary streams. This offers the advantage of reducing bursting of the droplets of concentrated solution.

The creamer powder obtained may then be agglomerated if desired. Any suitable agglomeration procedure may be used; for example, using the procedure described in US patent 5,400,972.

Further suitable aroma substrates may be mixed into the soluble beverage powder at this stage if desired. Powdered aromas are particularly suitable to be added at this stage. Any desired sweeteners, stabilisers, flavouring agents, and the like may also be mixed in at this stage.

The beverage creamer thus obtained is then mixed with a soluble coffee powder to provide a soluble coffee beverage product. The soluble coffee powder may be any spray- or freeze-dried coffee powder. Further, if desired, the soluble coffee powder may contain coffee surrogates such as chicory. Such coffee powders are commercially available or may be produced by conventional extraction and drying techniques. If desired, the coffee powder may be in the form of an agglomerated powder. Preferably the soluble coffee powder comprises 10% to 30% by weight of the soluble coffee beverage product; for example 15% to 20% by weight.

When dissolved in hot water, the soluble coffee beverage product provides a coffee beverage which has a light, fluffy and stable foam. Little or no lumping may be observed. Further, the coffee beverage has a pronounced coffee aroma and a full coffee flavour.

### Example 1

Coffee aroma is captured according to the process described in US patent 5222364 and combined with molten coconut fat. A beverage creamer powder is produced from a standardised solution containing non-fat milk solids, sweet whey powder, glucose syrup, sucrose and coconut fat. The standardised solution is preheated to 85°C in a plate heat exchanger and then heated to 105°C for 5 seconds by injection of steam. The heated solution is then concentrated to a solids content of 48 to 50% by weight. The concentrated solution is cooled to about 40°C and allowed to remain at this temperature for about 10 minutes.

The concentrated solution is heated to 75°C in a plate heat exchanger and the aromatised, molten coconut fat is mixed into the concentrated solution. The aromatized concentrated solution is then transferred to a spray drying tower. Nitrogen is injected into the aromatized concentrated solution prior to the spray drying tower at a pressure of about 3 bar. The gassed solution is then pumped at a pressure of 7 MPa to the nozzle of the spray-drying tower.

In the spray drying tower, the gassed solution is dried by spraying with air at 335°C under a pressure of 15.7 kPa on entry. The primary air stream is broken up into small secondary turbulent streams under a pressure of about 7.9 kPa by a screen placed at the concentrate nozzle.

The composition of the beverage creamer powder produced is:

| **Component** | **Amount (% by weight)** |
|---|---|
| Non-fat milk solids | 25.00 |
| Coconut fat | 14.10 |
| Sweet whey powder | 10.00 |
| Glucose syrup (DE of 37.5 to 40.5) | 34.20 |
| Sucrose | 12.80 |
| Aroma substrate and aroma | 1.40 |
| Moisture | 2.50 |

The beverage creamer powder is then mixed with soluble coffee powder to provide a soluble coffee beverage product. The soluble coffee beverage product contains about 18% by weight of soluble coffee powder and about 82% by weight of the beverage creamer powder.

About 12g of the powder is placed in a glass beaker and 150 ml of water at 85°C is added with stirring. The resulting beverage has a light, fluffy and stable foam upon a liquid of good, brown coffee colour. No lumping is observed. The beverage has a good coffee aroma and flavour with little milky notes.

### Example 2

The process of claim is repeated except that the composition of the beverage creamer is as follows:

| **Component** | **Amount (% by weight)** |
|---|---|
| Non-fat milk solids | 25.00 |
| Coconut fat | 14.10 |
| Sweet whey powder | 10.00 |
| Glucose syrup (DE of 37.5 to 40.5) | 47.00 |
| Sucrose | |
| Aroma substrate and aroma | 1.40 |
| Moisture | 2.50 |

The flavour and aroma of the beverage is similar except that it is less sweet. The foam has a light, fluffy appearance.

## Claims

1. A soluble beverage creamer which comprises 15% to 30% by weight of non-fat milk solids; sweet whey; a lipid component; and an aroma substrate carrying coffee aroma, the soluble beverage creamer being in powder form and containing gas for foaming.

2. A beverage creamer according to claim 1 which contains 5% to 20% by weight of sweet whey.

3. A beverage creamer according to claim 1 or claim 2 in which the lipid component is a vegetable oil.

4. A beverage creamer according to claim 3 which contains 5% to 25% by weight of vegetable oil.

5. A beverage creamer according to any of claims 1 to 4 in which the aroma substrate is coconut fat.

6. A beverage creamer according to claim 5 which contains 1% to 2% by weight of the aroma substrate.

7. A beverage creamer according to any of claims 1 to 6 which further comprises 30% to 70% by weight of a sweetener.

8. A beverage creamer according to claim 7 in which the sweetener is a glucose syrup having a DE in the range of 35 to 42.

9. A soluble coffee beverage powder which, upon the addition of water, is capable of forming a coffee beverage having a foamed upper surface, the soluble beverage powder comprising: a soluble coffee powder; and a soluble beverage creamer according to any of claims 1 to 8.

10. A soluble beverage powder according to claim 9 which comprises 10 to 30% by weight of the soluble coffee powder and 90% to 70% by weight of the soluble beverage creamer.

## Patentansprüche

1. Löslicher Getränkeweißer, der 15 bis 30 Gew.-% Nichtfett-Milchfeststoffe; Süßmolke; eine Lipidkomponente; und ein Aromasubstrat, das ein Träger für Kaffeearoma ist, aufweist, wobei der lösliche Getränkeweißer in Pulverform vorliegt und ein Gas für das Aufschäumen enthält.

2. Getränkeweißer nach Anspruch 1, der 5 bis 20 Gew.-% Süßmolke enthält.

3. Getränkeweißer nach Anspruch 1 oder 2, bei dem die Lipidkomponente ein Pflanzenöl ist.

4. Getränkeweißer nach Anspruch 3, der 5 bis 25 Gew.-% Pflanzenöl enthält.

5. Getränkeweißer nach irgendeinem der Ansprüche 1 bis 4, bei dem das Aromasubstrat Kokosfett ist.

6. Getränkeweißer nach Anspruch 5, der 1 bis 2 Gew.-% des Aromasubstrats enthält.

7. Getränkeweißer nach irgendeinem der Ansprüche 1 bis 6, der außerdem 30 bis 70 Gew.-% eines Süßungsmittels enthält.

8. Getränkeweißer nach Anspruch 7, bei dem das Süßungsmittel ein Glucosesirup mit einem DE im Bereich von 35 bis 42 ist.

9. Lösliches Kaffeegetränkepulver, das bei der Zugabe von Wasser in der Lage ist, ein Kaffeegetränk mit einer schaumigen Oberfläche zu bilden, wobei das lösliche Geränkepulver aufweist: ein lösliches Kaffeepulver; und einen löslichen Getränkeweißer nach einem der Ansprüche 1 bis 8.

10. Lösliches Getränkepulver nach Anspruch 9, das 10 bis 30 Gew.-% des löslichen Kaffeepulvers und 90 bis 70 Gew.-% des löslichen Getränkeweißers aufweist.

## Revendications

1. Agent de blanchiment pour boissons solubles, qui comprend 15 % à 30 % en poids d'extrait sec dégraissé du lait ; du lactosérum doux ; un constituant lipidique ; et un substrat d'arôme portant un arôme de café, l'agent de blanchiment pour boissons solubles étant sous forme de poudre et contenant un gaz pour la production de mousse.

2. Agent de blanchiment pour boissons suivant la revendication 1, qui contient 5 % à 20 % en poids de lactosérum doux.

3. Agent de blanchiment pour boissons suivant la revendication 1 ou la revendication 2, dans lequel le constituant lipidique est une huile végétale.

4. Agent de blanchiment pour boissons suivant la revendication 3, qui contient 5 % à 25 % en poids d'une huile végétale.

5. Agent de blanchiment pour boissons suivant l'une quelconque des revendications 1 à 4, dans lequel le substrat d'arôme consiste en matière grasse de coprah.

6. Agent de blanchiment pour boissons suivant la revendication 5, qui contient 1 % à 2 % en poids du substrat d'arôme.

7. Agent de blanchiment pour boissons suivant l'une quelconque des revendications 1 à 6, qui comprend en outre 30 % à 70 % en poids d'un édulcorant.

8. Agent de blanchiment pour boissons suivant la revendication 7, dans lequel l'édulcorant est un sirop de glucose ayant un équivalent en dextrose (ED) compris dans l'intervalle de 35 à 42.

9. Poudre de boisson du type café soluble qui, par addition d'eau, est capable de former une boisson consistant en café ayant une surface supérieure portant de la mousse, la poudre de boisson soluble comprenant : une poudre de café soluble ; et un agent de blanchiment pour boisson soluble suivant l'une quelconque des revendications 1 à 8.

10. Poudre de boisson soluble suivant la revendication 9, qui comprend 10 % à 30 % en poids de la poudre de café soluble et 90 % à 70 % en poids de l'agent de blanchiment pour boisson soluble.
